# EUROPEAN PATENT APPLICATION

(11) **EP 4 819 031 A1**
(43) Date of publication of application: **07.10.2026**
(21) Application number: 25168327.2
(22) Date of filing: 03.04.2025
(51) Int. Cl.: G06T 3/08, G06T 15/10

(54) **IMAGE PROCESSING SYSTEM**

(71) Applicant: Orbify AS, 0766 Oslo (NO)
(72) Inventor: Huitfeldt, Karsten, 0766 Oslo (NO); Reaver, Kai, 0192 Oslo (NO)
(74) Representative: Acapo Onsagers AS

(57) **Abstract**

An image processing system for outputting an image of a warped model of a region. The system comprises a processing unit arranged to receive first position information associated with a first location. The processing unit is arranged to process model data of a model of a region comprising the first location. The processing comprises warping at least a portion of the model based on a curved surface. The processing unit is arranged to output image data of a first image of at least a portion of the warped model, the first image being from a viewing position comprising the first location. The curved surface is arranged such that the first image comprises: a first portion comprising a substantially perspective view of part of the warped model; and a second portion comprising an aerial view of part of the warped model.

## Description

### Technical Field

There is provided an image processing unit. More specifically, there is provided an image processing unit for outputting an image of a warped model of a region. There is also provided a navigation system comprising the image processing unit, and a computer implemented method of image processing.

### Background

Mapping has traditionally utilised top-down views of a mapped region. Such top-down views can provide a comprehensive overview of the mapped region and can be particularly useful for understanding the layout of the region, enabling route planning, and allowing for an understanding of a terrain over a wide area.

More recently, dynamic mapping has become increasingly commonplace, particularly in applications such as satellite navigation systems and mapping apps on smartphones. These systems often utilise real-time location data to centre the portion of a map that is currently displayed on the user's current position. This provides an up-to-date and interactive mapping experience. Furthermore, in dynamic mapping, there is often an option to have the map orientated in accordance with a current direction of travel or current viewpoint of the user rather than orientated by a predetermined direction (usually North), as is traditional. These dynamic approaches to mapping allow users to navigate more effectively, as the map continuously adjusts to reflect a users' movements and surroundings.

Alongside the rise of dynamic mapping, there has been a significant increase in the use of 3D cartography and 3D modelling which enables users to receive perspective views of desired locations. These perspective views may take the form of images of the 3D model from a desired viewpoint. Driven by advancements in technology and the growing demand for more immersive and interactive mapping experiences, these techniques are now widely used in various applications, such as infotainment systems in vehicles and on smartphones. As such, users are becoming more accustomed to accessing perspective views of regions, which can offer a more realistic representation of a local environment and detailed visualisations of that location. For example, if the 3D model is a 3D model of a city or a portion of a city, a perspective view may be taken from a viewpoint looking at a particular building, street, junction, or intersection within the 3D model. The perspective may provide a user with a detailed representation of that specific location in the model. This may assist with individual steps of navigation, for example to identify in the real world a correct turning to make. This may also assist with finding a location, destination, feature of interest, or exploring a local region more generally.

Thus, users are now familiar with both top-down and perspective views in the context of mapping or visualising a region. Each of these view types has its limitations. Top-down views, while excellent for giving a broad overview, provide limited detail at a local level. Conversely, a perspective view may offer detailed insights at a local level but may not effectively convey the larger context of the surrounding area.

There is a need for a mapping solution that can provide both a high level of local detail to a user (e.g. to assist with individual steps during navigation) while simultaneously providing a broader overview of the wider area (e.g. to assist with route planning and navigation over longer distances, not simply for an individual navigation step). There is a need for such a solution which does this in a coherent, non-disjointed manner. There is a need for a dynamic mapping solution with these advantages.

### Summary

In a first aspect, there is provided an image processing system for outputting an image of a warped model of a region. The system comprises a processing unit. The processing unit is arranged to receive first position information associated with a first location. In some embodiments, the first position information is associated with a first location of a user in the real world (i.e. the first location is a real-world first location).

The processing unit is arranged to process model data of a model of a region comprising the first location. Said processing comprises warping at least a portion of the model based on a curved surface. In some embodiments, said warped portion comprises the first location.

The processing unit is arranged to output image data of a first image of at least a portion of the warped model. The first image is an image from a viewing position comprising the first location. In some embodiments, the first image is a two-dimensional image and / or the image data is image data of a two-dimensional image. This may mean that the image is suitable for display on a two-dimensional display, for example a screen such an infotainment screen in a vehicle and / or on the screen of mobile device such as a smartphone.

The image processing system and / or the curved surface is arranged such that the first image comprises a first portion comprising a substantially perspective view of part, some, or a portion of the warped model. The imaging processing system and / or the curved surface is arranged such that the first image comprises a second portion comprising an aerial view of part, some, or a portion of the warped model.

As above, the model is a model of a region comprising the first location. The first location may be a location in the real world. The model may therefore be a model of a real-world region. In some embodiments, the model is a digital model. In some embodiments, the model is a three-dimensional model.

The model data may be data that is suitable for rendering a model of the region comprising the first location. Such a model, when rendered, may appear as a visual representation of the region. For example, the model may comprise representations of real-world features such as buildings, roads, pavements, street furniture, geographical features, terrain, elevation etc. In some examples, the model may attempt to portray the real-world features with realism. The model may be photo realistic, for example. In other examples, the model may comprise schematic representations of real-world features, such as line drawings.

The first image may be a (two-dimensional or flat) visualisation of the warped model (e.g. the warped model as rendered) when viewed from a particular viewpoint (e.g. at or near the first location) and viewing direction. The processing unit may be arranged to capture the first image (e.g. first two-dimensional image). The processing unit may be arranged such that the first image may be captured by positioning a camera at the first location. For example, the processing unit may be arranged to align a field of view of said camera with a desired viewing direction of the first image. It should be understood that the camera may be a virtual camera. The processing unit may be arranged to virtually position the camera at the first location and virtually capture the image data / first image. Because the first image is captured from the first location, the first image may effectively be a rendering or visualisation of the warped model from that first location. The first location may be or correspond to a location of a user of the system (e.g. a location in the real-world).

The first image is an image of a warped model. As above, the warping is based on a curved surface. Warping may mean that the model has been distorted or otherwise altered relative to its original form based on the curved surface. For example, an originally substantially flat model may become curved. The warping may be referred to as geometric distortion. The warping may be described as the processing unit being arranged such that processing the model data comprises fitting the at least portion of the model on to the curved surface or projecting the at least portion of the model on to the curved surface or bending the at least portion of the model on to the curved surface.

The model may define or lie on a surface. The surface may be referred to as an un-warped surface. The surface may correspond to a ground level of the region of the model. The surface may be referred to as a terrain surface. The processing unit may be arranged such that processing the model data causes the un-warped or terrain surface to be warped based on the curved surface. This may introduce increased curvature to the terrain surface in accordance with the curvature shape of the curved surface. In some examples, the un-warped or terrain surface may be completely flat. In such cases, the terrain surface, after warping, may fit the curved surface exactly. However, the skilled reader will appreciate that most regions in the real world are not completely flat due to changes in elevation. The processing unit may not be arranged to flatten the terrain surface and so variation in elevation may be maintained after warping. These changes in elevations may appear as deviations relative to the curved surface.

By warping the model data as described, and then imaging the warped model, the image processing system may advantageously output an image that includes a first portion that can be described as a perspective view of a respective portion of the model and a second portion that can be described an aerial view of a respective portion of the three dimensional model. In this way, the advantages associated with each these views can be combined. The perspective view of the first portion provides a user or viewer of the first image with a high level of local detail while the aerial view of the second portion provides the user or viewer of the first image with a broad overview for greater context of the surrounding area.

The first image may advantageously show the model as seamlessly and continuously transitioning from the perspective view in the first portion of the first image to the aerial view in the second portion of the first image. The first image may therefore provide a cohesive means for a user to receive both the perspective and aerial views in a single image or mode. This may allow users to experience the complexity of the region comprising the first location at both micro and macro levels without switching between viewing modes.

It may be advantageous for the perspective view of the first portion to relate to a part of the model that is closer to first location than that of the aerial view of the second portion. The perspective view (which may be closer to the user) may be advantageous for providing a high level of local detail near to the first location. This may be advantageous for exploring a local area, e.g. for landmarks, features of interest, or to aid with instantaneous navigation. The aerial view (which is further from the user) may be advantageous for providing a broader overview further into the distance. This may be advantageous for navigation over longer distances or to give positional context to the first location.

The first image may be an image from a viewing position at (e.g. coincident with), near or adjacent to the first location. The first image being from a viewing position comprising the first location may mean that the viewing position is at, e.g. coincident with, the first location. In such cases, the first image may be said to be a first-person view. This may be because the first image may effectively be from the perspective of a user of the system. Alternatively, or additionally, the first image being from a viewing position comprising the first location may mean that the viewing position is such that the first location is visible in the first image. For example, the viewing position may be near to, and behind, the first location. This may mean that the first location appears in the first photo. This embodiment may be advantageous if a third-person view in the first image is desired. For example, the model data may comprise a data associated with an avatar. The image processing unit may be arranged to position the avatar at the first location. Thus, when the viewing position of the image is behind the first location, the avatar may appear in the first image. Thus, the first image may be said to be a third person. The avatar may be representative of a user e.g. may have a humanoid form. The avatar may take the form of a vehicle such as a car.

The first portion of the first image may be below the second portion of the first image. In other words, the first portion may be closer to the bottom of the first image than the second portion. Thus, the first portion of the first image may be referred to as a bottom portion of the first image. The second portion of the first image may be referred to as a top potion of the first image.

In some embodiments, the first image comprises a third portion between the first portion and the second portion. The third portion may also be described as an intermediate or transitional portion. The processing unit may be arranged such that the third portion comprises an intermediate or transitional view of part of the warped model. The geometry of the curved surface, and the relative viewing position, may mean that the third portion of the first image is an intermediate or transitional view between the perspective view and the top view.

Another advantage of the present disclosure is that the first image that is output by the processing unit is particularly suitable for displaying in a substantially portrait format. As used herein, a portrait orientation or portrait mode may mean that the height of the first image may be greater than the width of the first image. Portrait orientation screens are increasing in popularity. In many modern vehicles, for example, it is becoming more common to have a relatively large portrait format touch screen for infotainment purposes as well as for controlling functions of the vehicle such as climate control. Because the first image comprises both the first and second portion, which each may contain different views, the first image can contain both of these views which may be arranged substantially vertically. This may mean that the first image may fill full height of a portrait screen. This may not be the case if the first image only contained a perspective view or aerial of the model as perspective views are usually most suitable for displaying on a landscape mode screen.

In some embodiments, a height of the first image is greater than a width of the first image. In some embodiments, the first image is portrait or in a portrait mode.

In some embodiments, the image processing system is a navigation system. Thus, the processing unit of the navigation system may be arranged to determine and provide guidance on a route from a starting point to a destination.

The image processing system / navigation system may comprise a positioning module arranged to receive the current location of a user (i.e. the first position information and / or any subsequent position information). The positioning model may be arranged to receive the position in formation from a Global Navigation Satellite System, for example. In some embodiments, the first (and subsequent) position information may comprise directional information of the user. In such embodiments, the positioning model may comprise one or more inertial sensors such as an accelerometer and / or gyroscope to determine directional information.

The image processing system / navigation system may comprise a model module for receiving model data, e.g. data of a three-dimensional model of a region comprising the first location.

The image processing system / navigation system may comprise a route calculation engine. The route calculation engine may be arranged to receive destination data. The destination data may be received from a user interface in which a user inputs a desired destination. The route calculation engine may be arranged to compute a route from the current location (e.g. first location) of the user to the desired destination of the destination data. The route calculation engine may be arranged to generate secondary data associated with the computed route. Said secondary data may comprise navigation graphics or graphic elements. The navigation graphic or graphic elements may be arranged to guide a user along the computed route. The model module may be arranged to receive the secondary data as part of the received model (e.g. in addition to receiving primary data which may be the model data of the three-dimensional model of a region comprising the first location).

The image processing system / navigation system may comprise a display interface / display screen.

The image processing system may be described as a dynamic mapping system. This may be because the image that is output by the system is centred on, or from the viewpoint of, the first location. This may be the location where a user of the system is positioned.

As used herein, a "perspective view" means a view that substantially simulates the nature of the respective part of model as it would appear to the human eye, despite the perspective view being displayed on a two-dimensional surface. The perspective view may show parallel lines as substantially converging toward a vanishing point. This may create a sense of depth, making closer objects appear larger and farther objects appearing smaller. As the skilled reader will appreciate, a perspective view of first part of the model may be achieved when a viewing position of the first image is at or near to a ground level of the model (e.g. a ground level of the model at or near to the first viewing position). Thus, the first portion of the first image may be said to comprise a substantially ground-level view (e.g. ground-level perspective view) of part of the warped model.

As used herein, an "aerial view" means a view of a part of the model which is from an elevated position. The part of the model that is imaged in the second portion of the first image may effectively be a view of that part of the model from above (rather than at ground level, as in the perspective view). In an aerial view, much or all the depth information that is available in the perspective view may be lost. In some embodiments, the "aerial view" of the second portion of the first image may be said to be a plan view or a top view. This may be described as an orthographic top view.

In some embodiments, the second portion of the first image may comprise perspective distortions and so may not be a true or orthographic top view. In some embodiments (e.g., in embodiments where the aerial view is not a true top view), the image processing unit may be arranged such that the image data of the first image is captured using a perspective camera or a pinhole camera. The first image may be said to be a perspective projection or perspective image.

In some embodiments, the plan view or top view may be a true plan view or top view. In other words, the plan view or top view may be two-dimensional representation of a portion of the model as seen directly from above. Thus, in such embodiments, the second portion of the first image may not comprise any perspective distortion. There may be no depth or foreshortening. It may be as if the second portion of the first image is being viewed from an infinite distance. It may therefore be said that the curved surface (or the image processing system in general) is arranged such that the first image second portion (of the first image) comprises a top view, or orthographic top view, of part of the warped model.

In some embodiments (e.g., in embodiments where the aerial view is a true orthographic top view), the image processing unit may be arranged such that the image data of the first image is captured using an orthographic camera and / or parallel projection camera. Thus, the processing unit may be arranged to capture the first image using an orthographic camera (or a parallel projection camera). The first image may be said to be an orthographic projection or orthographic image. As will explained in more detail below, the inventors have recognised that a "perspective" view of a part of the model (e.g. as shown in the first portion of the first image) may be achievable even when using an orthographic camera (or in an orthographic projection) by appropriately warping the model before the image is captured. In such cases, the perspective view may be described as a simulated perspective view.

As used herein, the curved surface may be any curved surface which can be used to warp the model in a way which results in the first image having the above-described first and second portions, comprising a perspective and aerial view (e.g. orthographic or non-orthographic aerial view) of respective parts of model. The curved surface may be a virtual curved surface. This may mean that the processing unit is arranged to virtually warp the model data / model based on the virtual curved surface. In other words, this may be a process that is performed computationally by the processing unit. The processing unit may be arranged to define the curved surface as a two-dimensional surface or manifold in space. The curved surface may have a positive gradient in at least a first direction. The first direction may be substantially parallel to a viewing direction of the first image. In this way, the height of the surface (e.g. relative to a height at the first location) may increase along the first direction. This may be as distance from the first location increases.

In some embodiments, the curved surface has a simple or uniform curvature in at least the first direction. This may mean that the curvature in at least the first direction has a single or constant (positive) radius of curvature. This may be the case, for example, if the curved surface has a cylindrical or spherical curvature.

In some embodiments, the curved surface has a complex or non-uniform curvature in the at least the first direction. This may mean that the curvature in at least the first direction has a changing profile and / or changing radius of curvature. For example, a profile of the curved surface in the first direction may have a first portion and a second portion. The shape and / or curvature of the first portion may be different to the second portion. The profile of the curved surface in the first direction may have a third portion between the first and second portion. The shape and / or curvature of the third portion may be different to the first and / or second portion. Having different portions having different shapes or curvature may be advantageous for example to control the speed at which the transition from the perspective view to the aerial view is made in the first image. For example, the first portion of the profile may substantially correspond to the first portion in the first image. The third portion of the profile may substantially correspond to the second portion of the first image. It may be advantageous for the radius of curvature first and / or third portions to be relatively large such that the angle that the first and second portions of the first image are viewed at changes relatively slowly. This may increase the size of the first and second portions of the first image relative to other portions of the first image. It may be advantageous for the third portion of the profile to have an increased radius of curvature relative to the first and second portions. This may accelerate the transition from the perspective view and the aerial view in the first image. This may advantageously reduce a distance between the first and second portions of the first image and / or reduce a size or height of the third portion of the first image. In other words, the intermediate or transitional portion of the first image may be reduced in size or height.

In some embodiments, the curved surface is a single curved surface. A single curved surface may be described as an at least partial cylindrical curve. The processing unit may be arranged to project or warp the respective portion of the model onto a cylindrical surface when the curved surface is a single curved surface.

In some embodiments, the curved surface is a double curved surface. A double curved surface may have a positive gradient in two orthogonal directions. A double curved surface may have an equal positive gradient in two orthogonal directions. A double curved surface may be described as an at least partial spherical curve. The processing unit may be arranged to project or warp the respective portion of the model onto a spherical surface when the curved surface is a double curved surface.

In some embodiments, at least a portion of the curved surface has a non-circular curvature in at least the first direction.

In some embodiments, at least a portion of the curved surface is non-curved.

In some embodiments, the curved surface has a positive gradient in a plurality of direction (not just the first direction).

The inventors have found that using a spherical curved surface may be advantageous if a panoramic effect is desired. However, the inventors have found that a using a cylindrical curved surface may advantageously reduce the computational requirements for processing / warping the model data.

In some embodiments, the processing unit may be arranged to warp at least some of the model data asymmetrically. This may mean that different parts of the model are warped differently. For example, the part of the model that forms the first portion of the first image may be warped differently to the part of the model that forms the second portion of the first image. In some embodiments, the processing unit may be arranged to warp at the part of the model data that forms the first portion of the first image asymmetrically.

In some embodiments, the processing unit may be arranged such that the image data of the first image is captured by a virtual orthographic camera. This may be such that the second portion of the first image comprises an orthographic top view of part of the warped model.

In some embodiments, the processing unit being arranged to warp the model data may comprise distorting a first part of the model such that the first portion of first image comprises a simulated perspective view of the first part of the model when captured by the orthographic camera.

As used herein, a "simulated" perspective view may mean a view in which the perception of depth is simulated. This may apply for orthographic projections or images captured with an orthographic camera. In such examples, in the absence of additional processing / warping, the orthographic camera may capture an orthographic view of the model. The perception of depth may be artificially introduced (or simulated) by warping the model to give the appearance of parallel lines converging in the captured first image. This may mimic or simulate a perspective view even when the camera is an orthographic camera.

In some embodiments, the processing unit may be arranged to warp the model data such that perspective distortions are simulated in the first portion of the first image. This may be the case even when the first image is an orthographic projection and / or wherein the processing unit is arranged to capture the first image using an orthographic camera. The warping may be arranged such that said perspective distortions are not simulated in the second portion of the first image.

Even when the processing unit is arranged to warp at least some of the model data to provide a simulated perspective view in the first image, it may be said that the processing unit is arranged to warp at least model based on a curved surface. This is explained in more detail below.

At least the part of the model that is imaged in the second portion of the first image, referred to herein as the second part of the model, may be warped using a curved surface as described above (e.g. a cylindrical or spherical curved surface).

The part of the model that is imaged in the first portion of the first image, referred to herein as the first part of the model, may experience more complicated warping than the second part. For example, in addition to bending, the second part of the model may be stretched or otherwise skewed. This stretching or skewing may be in one or both of first and second orthogonal directions (e.g. one or both of a first direction in height and a second direction in width). The processing unit may be arranged to warp the first part of the model such that the skewing / stretching (in either or both of the first and second direction) is greatest closest to the first location and decreases with distance from the first location. This may distort the first part of the model in a fashion which appears as perspective distortion in the first portion of the first image. In such examples, with more complicated warping, the processing unit may be described as warping the first part of the model based on a curved volume. However, because the curved volume may still comprise a curved surface, the first part of model may still be described as being warped based on a curved surface.

The model data may comprise primary data. The primary data may be model data derived from or directly related to the region that the model is of. For example, the primary data may be data derived from or directly related to a real-world region. The model data may comprise data from at least one of: photogrammetry, LiDAR scans or Geographic Information System (GiS) data. The model data may comprise data associated with point clouds (e.g. raw or classified point clouds), 3D meshes, orthophotos, a digital surface model, a digital terrain model, a textured models, intensity or RGB data, building footprints, raster (GeoTIFF), zoning data, vector (shapefile, GeoJSON), 3D terrain, or heatmaps.

In some embodiments, the processing unit is arranged such that the first image comprises one or more navigation graphics or graphic elements such as way points, direction arrows, highlighted routes. The processing unit may be arranged such that navigation graphic are overlaid on the three-dimensional model.

The model data may comprise secondary data. The secondary data may be model data related to the above described navigation graphics or graphic elements. The secondary data may comprise real-time data from sources such as trackers or other information sources (vehicles, cellphones, points of interest, businesses etc.), or other real-time information sources like traffic information, air pollution, weather. The secondary data may supplement the primary data. The secondary data may relate to at least one of: one or more navigation graphics such as way points or direction arrows, street name labels, location information, or an avatar, e.g. a vehicle or person / humanoid. The vehicle or person may represent or relate to a user of the system.

The model data may comprise both primary data and secondary data. The secondary data may be overlaid on the primary data. This may mean that the secondary data may appear to be overlaid on the primary data in the first image. The processing unit may be arranged to overlay or otherwise combine the secondary data and the primary data. The processing unit may be arranged to process both the primary and secondary data. This mean that both the primary and secondary data is warped based on the curved surface. This may advantageously mean that the secondary data undergoes the same warping process as the primary data.

In some embodiments, the system is arranged such that the first image is a visualisation of the at least portion of the warped model in a viewing direction that is substantially parallel to the first direction.

In some embodiments, the curved surface has a vertical normal at the first location. In some embodiments, the first image is a visualisation of the respective portion of the warped model.

As used herein, a viewing direction may refer to a direction defined from the viewer's (or virtual camera's) position (e.g. at the first location).

In some embodiments, the processing unit may be arranged to receive the model data of the model of the region comprising the first location. This may be prior to processing the model data.

The processing unit may be said to capture the image data of the first image. This may be instead of, or as well as, outputting the image data of the first image. If the processing unit is arranged to both capture and output the image data, the capturing may be before the outputting. As above, said the processing unit may be arranged such that said capturing is with a (virtual) camera.

In some embodiments, the image processing system is arranged to determine a radius of curvature of the curved surfaced based on a received first control signal. This may advantageously allow for control of the gradient and / or shape of the curved surface and so the gradient or shape of the warped model. This may advantageously change the scaling and / or the visual range of the first image. For example, as the radius of curvature increases, the content in the second portion of the first image may correspond to features that are an increasing distance away from the first location, and vice versa. The received first control signal may be received from a user interface. The user interface may be a feature of the image processing system or external to the image processing system. In the case of the latter, the image processing system may comprise a means for receiving the first control signal directly or indirectly from the external user interface. This may comprise a wired or wireless connection, for example.

In some embodiments, the image processing system is arranged to determine an angular range of the first image and / or the curved surface based on a received second control signal. This may advantageously allow for control of the field of view of the first image. The received second control signal may be received from a user interface. The user interface may be a feature of the image processing system or external to the image processing system. In the case of the latter, the image processing system may comprise a means for receiving the first control signal directly or indirectly from the external user interface. This may comprise a wired or wireless connection, for example.

In some embodiments, the first and / or second control signal may depend on at least one of: waypoint decisions, length of journey when the system is a navigation system, or current speed of travel. For example, as the length of a planned journey increases, a first control signal may be chosen which increases the radius of curvature of the curved surface.

In some embodiments, the angular extent of the curved surface may be 45 degrees or more, optionally 60 degrees or more, optionally 70 degrees or more, optionally 80 degrees or more, optionally 90 degrees or more. In some embodiments, the angular extend of the curved surface may be between 45 degrees and 180 degrees, 70 degrees and 135 degrees, optionally between 80 degrees and 135 degrees, optionally between 80 and 100 degrees. The angular extent of the curved surface may refer to a vertical angular extent.

In some embodiments, the vertical angular extent of the warped model contained or captured in the first image is 45 degrees or more, optionally 60 degrees or more, optionally 70 degrees or more, optionally 80 degrees or more. In some embodiments, the vertical angular extent of the warped model contained or captured in the first image is 180 degree or less, optionally 135 degrees or less, optionally 100 degrees or less. In some embodiments, the vertical angular extent of the warped model contained in the first image is between 70 and 100 degrees, optionally between 80 and 100 degrees, optionally between 85 and 95 degrees.

In some embodiments, the vertical angular extent of the warped model contained or captured in the first image is less than the vertical angular extent of the curved surface and / or vertical angular extent of the warped model. In other words, a portion (e.g. a top portion) of the curved surface or the warped model may not be visible in the first image.

In some embodiments, the radius of curvature of the curved surface is 50 metres or more, optionally 100 metres or more, optionally 1000 meters or more.

In some embodiments, a viewing direction of the first image is substantially perpendicular to a normal of the curved surface at the first location. A viewing direction of the first image may be substantially tangential to the curved surface at the first location.

In some embodiments, the model is a model of a portion of a city or geographical region. The city or geographical region may be a real-world city or real-world geographical region.

In some embodiments, the position information may comprise both location and orientation information.

In some embodiments, the image processing system is dynamic. The position information may be updated dynamically. The image processing system may be arranged to receive position information continuously and / or in real time.

In some embodiments, the image processing system may be arranged to output dynamic image data. This may mean that the image processing system is arranged to continuously or dynamically update the output image data as the position information is continuously updated. Said updating may be in real time.

In some embodiments, the image processing system is arranged to receive second position information. The second position information may be different to the first position information. For example, the location and / or orientation of the second position information may be different to the respective location and / or orientation of the first position information. In some embodiments, the image processing system (e.g. the processing unit) may be arranged to output a second image of at least a portion of a warped model. The second image may be from a viewing position at (e.g. coincident with) the second location. Thus, the image processing system may be said to output updated image data of an updated (second) image when the location (of the user) is updated (to a second location).

In some embodiments, the second image may be an image of the same warped model as the first image. This may advantageously mean that the warped model is re-used for outputting the first and second images. This advantageously reduces computational costs.

The image processing system may be arranged to process model data of the model of a region comprising the second location.

In some embodiments, previously received model data may be processed (or reprocessed) to be warped based on a curved surface after receipt of the second position information. The second image may be an image of processed or reprocessed previously received model data. In some embodiments, the region of the first model may comprise both the first location and the second location. This may enable the received model data to be recycled for multiple iterations.

In some embodiments, the image processing system may be arranged to process model data of a second model of a region comprising the second location. This may be the case when the second image is an image of a second warped model. In some embodiments, the processing (of the model data of the second model) comprises warping at least a portion of a second model based on a curved surface. The curved surface may be a virtual curved surface. The curved surface may be the same curved surface that the processing unit is arranged to warp the first model of the region comprising the first location. This may mean that the curved surface has the same geometry (e.g. the same radius of curvature) during warping at both the first and second location. However, the processing unit may be arranged to translate the curved surface to compensate for the change in position from the first location to the second location.

In some embodiments, different curved surfaces may be used at the first and second locations.

In some embodiments, the image processing system is further arranged to receive the model data of the second model of the region comprising the second location.

In some embodiments, the image processing system (e.g. the processing unit) may be arranged to repeatedly or continuously receive position information associated with an nth location (e.g. an nth location of the user). n may increase by one for each iteration or update. The nth location may be different to the n-1 location. In some embodiments, the image processing system (e.g. the processing unit) may be arranged to output image data of an nth image of at least a portion of a warped model for each location n. Thus, the image processing system may be said to continuously output an updated (nth) image when the location (of the user) is updated to an nth location. In some embodiments, n may greater than 2, optionally greater than 100, optionally greater than 1000. In some embodiments, the image processing system may be arranged to receive an updated location and output an updated image data at least once per second. A refresh rate may be selected based on the processing power of the image processing system. The refresh may be as high as 60 times a second or even higher if image processing system has suitably high processing power.

In some embodiments, the image processing system may be arranged to update the warped model before updating the image data on at least some of the cycles of updating the image data. For example, the image processing system may be arranged to update the warped model every third time an updated location is received. The image processing unit may be arranged such that updating the warped model comprises: receiving updated model data of an mth model of a region comprising the nth location; and processing model data of the mth model to warp at least a portion of the mth model based on a curved surface. The image processing system may then be arranged to output image data of an nth image which may be an image of at least a portion of the warped mth model from a viewing position at the nth location. m may be less than or equal to n. For example, if the image processing system is arranged to update the warped model every third time an updated location is received, then m may equal n divided by 3.

In some embodiments, the image processing system is an imaging and mapping system. In some embodiments, the image processing system is a geospatial image processing device. In some embodiments, the image processing system is a geospatial image processing and mapping system.

In some embodiments, the image processing system is an image transformation or image warping system. In some embodiments, the image processing system is a model transformation system or a model warping system.

In some embodiments, the image processing device is a geospatial warping device.

In some embodiments, the image processing device is an image processing device.

In some embodiments, the image processing device is a spatial imaging device. In some embodiments, the image processing device is a spatial imaging and mapping device.

In a second aspect, there is provided a navigation system comprising the image processing system of the first aspect and / or comprising a display arranged to receive and display image data output by the processing unit of the image processing system. For example, the display may be arranged to receive and display image data of the first image output by the processing unit.

In some embodiments, the navigation system comprises a position information device. The position information device may be arranged to receive position information.

In a third aspect, there is provided a computer-implemented method of imaging processing for outputting an image of a warped model of a region. The method comprises, at a processing unit:
receiving first position information associated with a first location;
processing model data of a model of a region comprising the first location to warp at least a portion of the mode, the warping being based on a curved surface; and
outputting (and / or capture) image data of a first image of at least a portion of the warped model, the first image comprising a viewing position at the first location.

The first image comprises a first (e.g. bottom) portion comprising a substantially perspective view of part, some, or a portion of the warped model. The first image comprises a second (e.g. top) portion comprising a substantially aerial view of part, some, or a portion of the warped model.

**In** a fourth aspect, there is provided a data processing system comprising a processor adapted to perform the steps of the method of the third aspect.

**In** a fifth aspect, there is provided a computer program product comprising instructions which, when the program is executed by a computer, cause the computer to carry out the steps of the method of the third aspect.

**In** a sixth aspect, there is provided a computer-readable storage medium comprising instructions which, when executed by a computer, cause the computer to carry out the steps of the method of the third aspect.

In a seventh aspect, there is provided an image processing system for outputting an image of a model of a region. The system comprises a processing unit arranged to receive first position information associated with a first location. The processing unit is arranged to output and / or capture image data of a first image of at least a portion of a model of a region comprising the first location, the first image being from a viewing position comprising the first location. The system is arranged such that the first image comprises a first (e.g. bottom) portion comprising a substantially perspective view of part of the model and a second (e.g. top) portion comprising a substantially aerial view of part of the model.

In some embodiments, the processing unit is arranged to receive model data of a model of a region comprising the first location. This may be prior to outputting and / or capturing the first image.

In some embodiments, the processing unit is arranged to process model data of a model of a region comprising the first location. The processing unit may be arranged to process the model data such that the first image has the first portion comprising the substantially perspective view of part of the model and the second portion comprising the substantially aerial view of part of the model.

In some embodiments, the processing unit being arranged to process the model data may comprise the processing unit being arranged to process the model data such that the represented by the data is warped or bent. In some embodiments, the warping or bending may be based on a curved surface. For example, the at least portion of the model may be fitted or projected on to the curved surface. The curved surface may have a positive gradient. The curved surface may have a positive gradient in a direction extending from the first location. The curved surface may have a positive gradient in a direction extending from the first location and which is substantially parallel to a viewpoint of the first image.

It should be understood that features and advantages described in relation to one aspect may be applicable to the other aspects. Notably, features and advantages described in relation to the system of the first aspect may be applicable to the navigation system of the second aspect, the method of the third aspect and / or the system of seventh aspect.

### Brief description of the drawings

Specific embodiments are described by way of example only with reference to the following figures:
Figure 1 represents a model of a region;
Figure 2 represents the model of Figure 1 after the model data of the model has been warped based on a curved surface in accordance with the present disclosure;
Figure 3 is an image of the warped model taken from a first location;
Figure 4 schematically represents the field of view of an image output based on a viewer being at a first location, if the image were taken of a non-warped model;
Figure 5 schematically represents the field of a view of an image output based on a view being the first location, if the image were taken of a warped model;
Figure 6 is a flow chart representing a method according to the present disclosure;
Figure 7 is an image of the warped model taken from a first location wherein the model comprises secondary navigation data;
Figure 8 schematically represents warping a model of a region using curved surfaces having differing radii of curvature;
Figure 9 schematically represents an embodiment of the invention in which the warping is repeated at second and third locations;
Figure 10 schematically illustrates an image processing system according to the present disclosure;
Figure 11 schematically represents a warped model resulting from warping with a second curved surface;
Figure 12 schematically represents a warped model resulting from warping with a third curved surface;
Figure 13 schematically represents a warped model resulting from warping with a fourth curved surface;
Figure 14 represents a further example of a warped model that has been warped using an approach in accordance with the present disclosure;
Figure 15 is a schematic side view of a warped model which has been warped in the same ways as the warped model of Figure 14 and also represents an orthographic camera; and
Figure 16 is an image of the warped model of Figure 14 captured using an orthographic camera.

### Detailed description

The present disclosure relates to an image processing system for outputting an image of a warped model of a region, and a corresponding method. This warping process, and the advantages of imaging the model after said warping, will be described in general terms initially before the method is described in more detail.

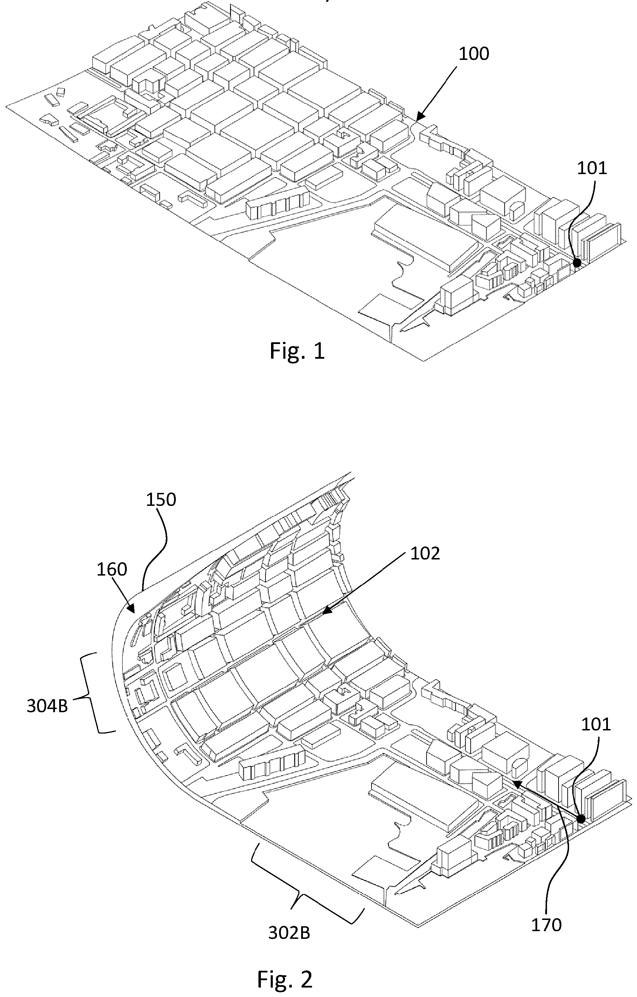

Figure 1 shows a model 100 of a region comprising a first location 101. In this example, the model 100 is a three-dimensional model and / or digital model. The region comprises a portion of a city. The model is a three-dimensional model of that portion of the city. As can be seen in the Figure 1, this portion comprises of the city comprises a plurality of buildings and streets or roads as well as various other features.

Figure 2 shows a warped model 102. The warped model 102 of Figure 2 comprises the model 100 of Figure 1 after the model 100 has been warped based on a curved surface 150. The warping has caused geometric distortion of the model 100 of Figure 1 such that a curvature has been introduced into the warped model 102. This curvature has a positive gradient such that the height of a ground level of the warped model 102 generally increases with distance from the first location 101. In this example, the curved surface 150 is a single curved surface having a substantially cylindrical curvature.

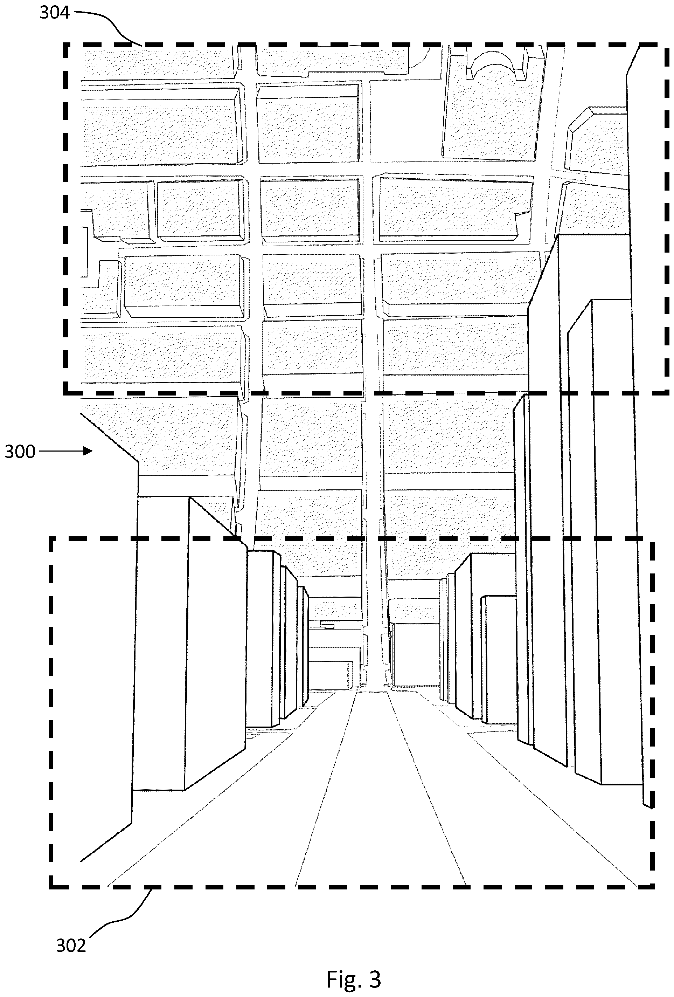

Figure 3 is an image 300 of the warped model 102 captured from a viewpoint at the first location 101. The viewing direction of image 300 is represented by arrow 170 in Figure 2. The image 300 of Figure 3 is in a portrait mode, such that the height of the image 300 is greater than its width.

The geometry of the curved surface 150 that is used to warp the model, and the viewing position of the image 300, results in the image 300 comprising both a perspective view of a part of the warped model 102 and an aerial view of a different part of the warped model 102. In image 300, the view of the model seamlessly and continuously transitions from a perspective view at or towards the bottom of the image 300 to an aerial view at or towards the top of the image 300.

In more detail, the image 300 comprises a first portion 302 and a second portion 304. The first portion 302 is at or towards the bottom of the image 300 and so may be referred to as a bottom portion of the image 300. The second portion 304 is at or towards the top of the image 300 and so may be referred to as a top portion of the image 300. There is a portion between the first and second portions 302, 304. This portion may be referred to as a third portion and / or an intermediate or transition portion. The first portion 302 of image 300 captures (or comprises or visualises) a perspective view of part of the warped model. The second portion 304 of image 300 captures (or comprises or visualises) an aerial view of the part of the warped model. The distance of content in image 300 from the first location 101 increases from the bottom to the top of the image 300. Therefore, the content in the first portion 302 corresponds to features in the warped model that are closer to the first location 101 than the second portion 304.

Turning back to Figure 2, the part of the warped model 102 which is shown in perspective view is represented by 302B. The part of the warped model 102 which is shown in aerial view is represented by 304B.

Figure 2 demonstrates why the different views (perspective and aerial views) are both visible in image 300. The model 102 is warped based on a curved surface 150 having a positive gradient. Therefore, the height and angle of a surface (e.g. terrain surface) of the warped model 102 increases with distance from the first location 101. To capture image 300, a fixed viewing position at the first location 101 and fixed viewing direction 170 is used. Thus, the relationship between the warped model 102 and the viewing position / direction (or camera) changes with distance from the first location 101. In part 302B of the model (i.e. at or near to the first location 101) the first viewing location 101 is substantially at street level. Therefore, part 302B of the warped model 101 appears as a substantially perspective view (e.g. where parallel lines appear to converge) in image 300. Further from the first location 101, the angle between the viewing direction 170 and a surface of the warped model 102 changes. Therefore, parts of the warped model 101 in part 304B of the model 102 appear elevated and a substantially aerial view of this part appears in image 300.

Image 300 contains both a perspective view of model content nearby to the first location 101 and an aerial view of model content further away from the first location 101. This is advantageous because the perspective view provides a high level of local detail near to the first location 101 while the aerial view provides a broader overview further into the distance. For example, the content in the first portion 302 of image 300 gives a realistic, perspective or 3D view of a model of the region adjacent to first location 101. This could aid with instantaneous navigation, for example to help identify which block or street a user of image 300 is adjacent to. This could also help with identifying landmarks or features of interest in the immediate locality of the first location 101. The content in the second portion 304 of image 300 is helpful for navigation over longer distances or to give wider context to the location of the first location 101 within the region of the model, for example. In these cases, depth information becomes less useful than the more conventional aerial view of traditional mapping.

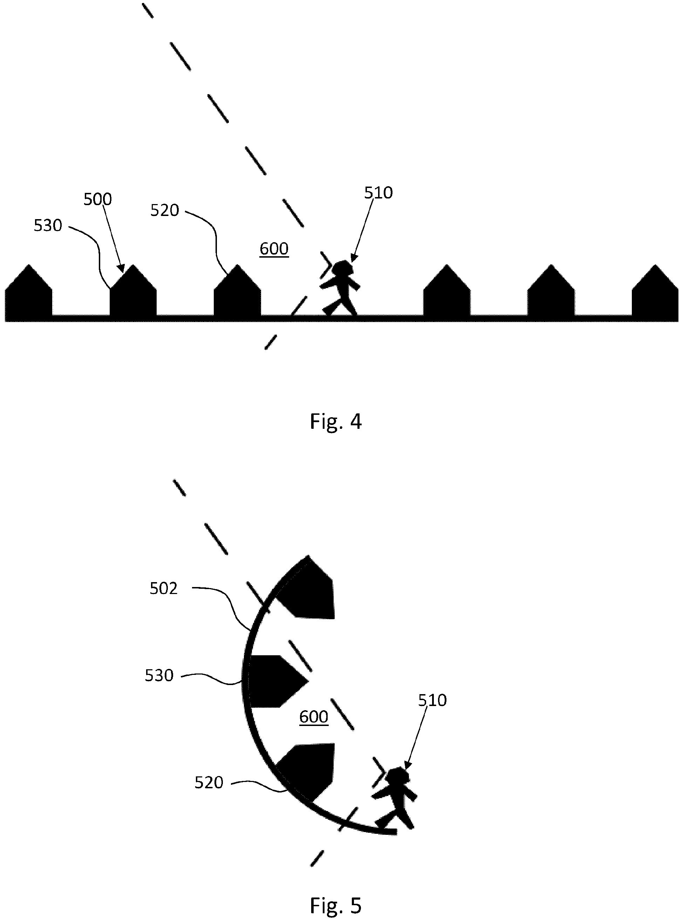

Another advantage of imaging a warped model 102 is that the image 300 contains useful information over a much further distance (from the first location 101). This is demonstrated in Figures 4 and 5, both of which show schematic cross-sectional representations of a model.

Figure 4 shows a model 500 of a region. A viewer is shown at a first location 510 in the model 500. The limits of a vertical field of view 600 of the viewer at the first location 510 are represented by broken lines in Figure 4 and 5. The viewer is at street or ground level in the model looking to the left as shown in Figure 4. The viewer is merely representative of any viewer, camera, or other image capturing means of the model 500 from the first location 510.

The model 500 comprises a plurality of buildings including a first building 520 which is adjacent to the first location 510 and second building 530 behind the first building 520 (from the perspective of the viewer at the first location 510). Both the first and second buildings 520, 530 are in the field of view 600 of the viewer. As should be appreciated, an image taken from the viewpoint of the viewer shown at the first location in Figure 4 will comprise a perspective view of the model 500. This will include a perspective view of the first building 520 as well as the buildings behind the first building 520. However, in this perspective view, the first building 520 will substantially block from view the content behind the first building 520. For example, the second building 530 will be substantially blocked from view by the first building 520 in front of it. This places a limit on how far a viewer at the first location 510 in Figure 4 can usefully "see". Although both the first and second buildings 520, 530 are in the field of view 600 of the viewer at the first location 510, the viewers visibility of the second building 530 will be significantly limited.

Figure 5 shows a warped model 502 of the same region as Figure 4. The warped model 502 has been formed by warping the model 500 of Figure 4 based on a curved surface, similarly to what is shown in Figure 2. The warping in Figure 5 increases the height of both the first building 520 and the second building 530 from the point of view of the viewer at the first location 510. The height of the second building 530 increases more than the first building 520 because the second building 530 is further from the first location 510 than the first building 520. This means that the second building 530 is no longer blocked by the first building 520 from the perspective of the viewer at the first location 510. Thus, the warping increases how far a viewer at the location 510 can usefully "see". The visibility of the second building is significant increased - although the viewer at the first location 510 will receive a different view of the first building vs. the second building after warping. As should be clear from Figure 5, the viewer will see a substantially aerial or elevated view of the second building 530 and something closer to a perspective ground-level view of the first building 520. As described previously, these different views serve different purposes and it is actually advantageous for the viewer to receive different views of different parts of the warped model 502.

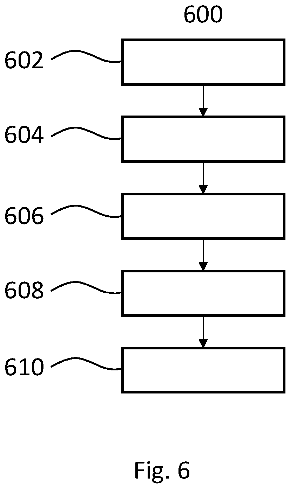

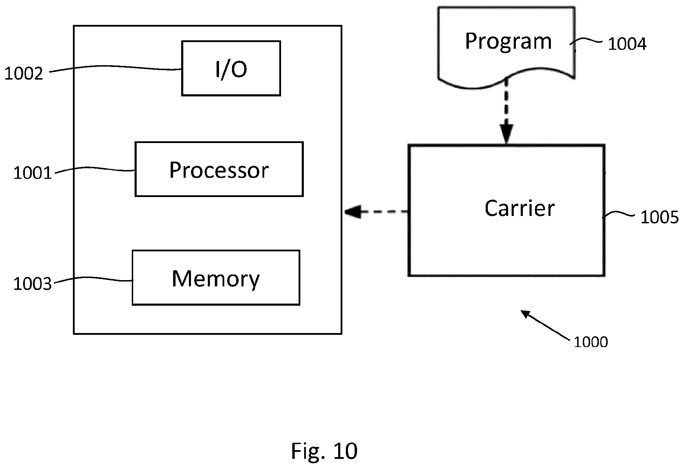

An example method 600 of image processing to output an image (such as image 300) of a warped model of a region will now be described in conjunction with Figure 6. Figure 6 is flow chart representing steps of a method according to the present disclosure. In this example, the method is carried out using an image processing system 1000 such as that which is shown in Figure 10.

Step 602 of the method comprises obtaining and / or receiving first position information of a user at a first location. The first position information comprises information which can be used to identify the first location. In some examples, the image processing system comprises a means for determining the location of the user. For example, the system 1000 itself may comprise a GPS tracking system which can identify positional information of the user which identifies the position of the first location. In some examples, the image processing system comprises a means for receiving the first position information of the user at the first location from a secondary device. In some examples, the secondary device is a smartphone which has means for identifying that the user is at the first location. In some examples, the secondary device is a tracking system of a vehicle (e.g. a GPS tracking system) which may be part of a satellite navigation system of the vehicle. The means for receiving the first position information from the secondary device may comprise a wired or wireless connection directly or indirectly connecting the image processing system 1000 with the secondary device to enable data transfer.

Step 604 of the method comprises receiving model data of a model (e.g. three-dimensional model) of a region comprising the first location. For example, model data of the model 100 shown in Figure 1 is received at step 604. Because the model is of a region comprising the first location, the model data that is received is of a model that is relevant to the user at the first location. In other words, the model is a representation of a region local to the user at the first location. In some examples, the model data is stored in a memory of the image processing system. In some examples, the model data is stored in an external memory, for example in the cloud, and the image processing system comprises a means to receive (e.g. download) the model data. In examples, the model comprises data for the region comprising the first location from at least one of photogrammetry, LiDAR scans, or Geographic Information System (GiS).

Step 606 of the method comprises processing the model data such that a portion of the model is warped based on a virtual curved surface. Therefore, the output of step 606 is processed model data of a warped model. For example, the processed model data is of a warped model 102 as shown in Figure 2. In examples, processing of the model data comprises receiving or defining a curved surface (such as curved surface 150 shown in Figure 2). The model data is then adjusted based on the curved surface. In an example, this means adjusting the coordinates of data points in the model data based on coordinates or positions of a corresponding portion of the curved surface. Because the curved surface has a positive gradient which generally extends from the first location 101, the effect of adding the curved surface to the model 100 increases with distance from the first location 101 (i.e. the amount of adjustment generally increases with distance from the first location).

Typically, the model data that is received at step 604 will be of a region that is not completely flat. This may be due to real world changes in elevation (e.g. due to hills, valleys or other geographical features). Because the curved surface is added to the terrain surface, these changes in elevation will still be present in the warped model. This is evident in Figure 2, where there are deviations between the curved surface 150 and the warped model 102. Feature 160 in Figure 2 is such a deviation caused by a slight increase in the elevation of the unwrapped model 100 towards the top left of the model 100.

Step 608 of the method comprises capturing a first image as a visualisation of the warped model from a viewing position at or near the first location. For example, in the context of Figure 2, step 608 comprises capturing first image 300 as a visualisation of the warped model from first location 101 with viewing direction 170. In examples, the capturing of the first image 101 comprises the image processing system 1000 placing a virtual camera at or near the first location 101 with viewing direction 170.

Step 610 of the method comprises outputting image data of the first image that is captured in step 608. In examples, the image data be output to a secondary device comprising a display. The secondary device is arranged to display the first image.

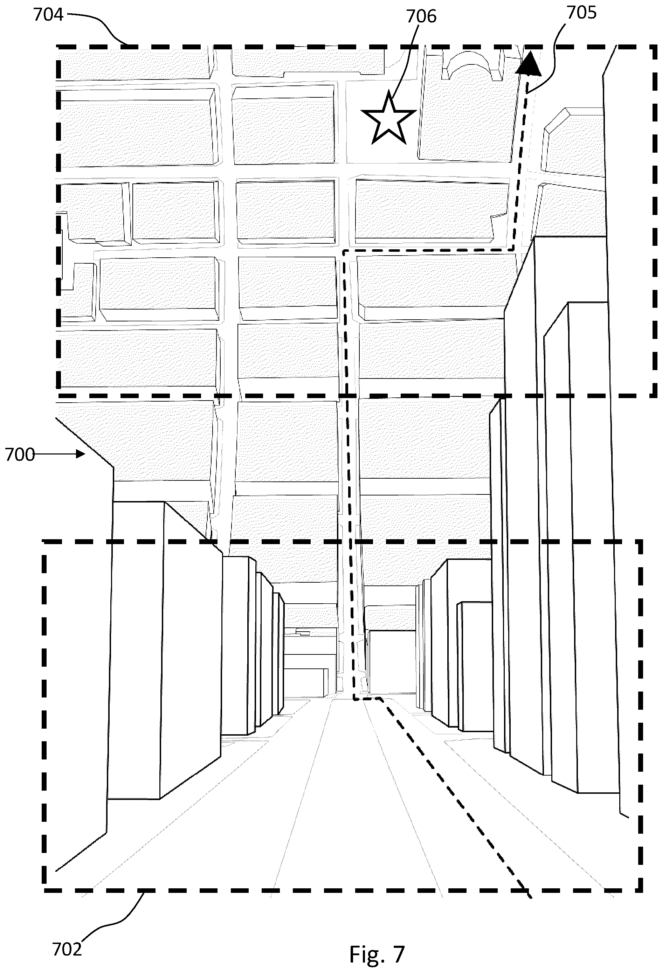

Examples in accordance with the present disclosure may have particular application in the context of a navigation system. In such examples, the model data that is received at step 604 may additionally comprise secondary data related to one or more graphics or information for navigation. In such examples, the secondary data is warped in the same way as the rest of the model data. Figure 7 shows an image 700 of a warped model comprising such secondary data. Like image 300 of the Figure 3, image 700 comprises a first (bottom) portion 702 comprising a substantially perspective view of part of the warped model and a second (top) portion 704 comprising a substantially aerial view of part of the warped model. Image 700 additionally comprises the secondary data in the form of direction arrow 705 and waypoint 706 which are for navigation purposes.

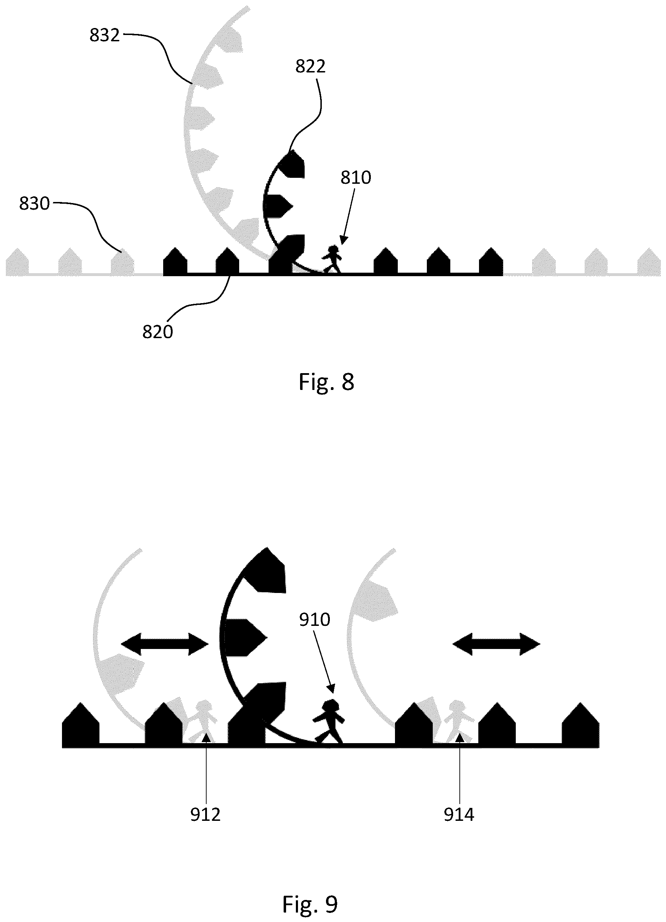

In some examples, the image processing system 1000 is arranged to determine a radius of curvature and / or angular extent of the curved surface in step 606 of the method. This determination is based on received control signals, for example control signals received from a user interface. Figure 8 is a schematic representing how different curved surfaces (having different radii of curvature or angular extent) can change the warping of the model. Figure 8 shows a first location 810. Figure 8 shows a first un-warped model 820 and a second un-warped model 830. The first un-warped model 820 is warped using a first curved surface to form warped model 822. The second un-warped model 830 is warped using a second curved surface. The second curved surface has a larger radius of curvature and angular extent that the first curved surface. This changes the appearance of the warped models 822, 832. It will be appreciated that the change in radius of curvature changes the scale of image taken from the first location 810. A larger radius of curvature means that the content that is in the aerial view (or second portion) of the image becomes further away. This may be desirable as the distance to be travelled or the speed of travel increases.

In examples, the method is repeated, e.g. continuously. In such examples, the method comprises repeatedly receiving position information of the user. As the user moves from the first location to subsequent locations (e.g. second, third, fourth locations etc.) the method may comprise receiving model data of a model of a region comprising the subsequent locations and then processing that model data to output a warped model. For each new location, the method may comprise capturing and outputting an updated image. In some examples, the same model data or same warped model data may be used for multiple locations. In such examples, the viewing position may simply be moved within the same model. This updating is represented in Figure 9. Figure 9 is a schematic showing a first location 910, a second location 912, and a third location 914 and how the warping changes when the location changes. In some examples, step 604 of the method may not be repeated for all iterations and previously received model data may be re-used in step 606.

Turning now to Figure 10, which shows a schematically illustrated data processing unit 1000. The data processing unit 1000 comprises an input/output circuitry 1002, at least one processor 1001 and a memory 1003. The memory 1003 contains instructions executable by the processor 1001, causing the data processing unit 1000 to perform the method of Figure 6.

The instructions that are executable by the processor 1001 may be software in the form of a computer program 1004. The computer program 1004 may be contained in or by a carrier 1005, which may provide the computer program 1001 to the memory 1003 and processor 1001. The carrier 1005 may be in any suitable form including an electronic signal, an optical signal, a radio signal or a computer readable storage medium.

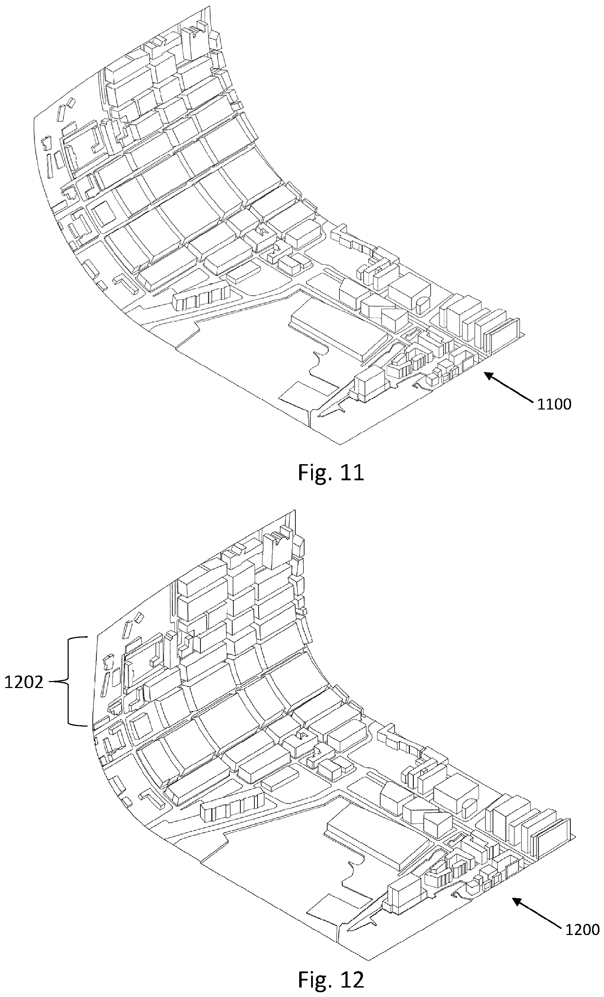

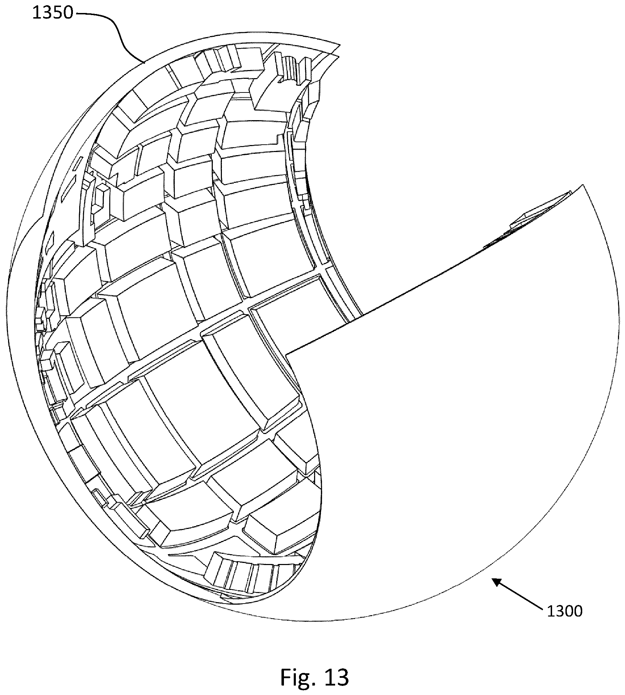

As used herein, the term "computer readable medium" may be a universal serial bus (USB) memory, a digital versatile disc (DVD), a Blu-ray disc, a software module that is received as a stream of data, a Flash memory, a hard drive, a memory card, such as a Memory Stick, a multimedia card (MMC), secure digital (SD) card, etc. One or more of the aforementioned examples of computer readable medium may be provided as one or more computer program products
Figures 11 to 13 show further examples in which differently shaped curved surfaces are used to warp a model. Figure 11 shows a warped model 1100 with a larger radius of curvature than in Figure 2, and a smaller angular extent than in Figure 2. Figure 12 shows a warped model 1200 in which the curved surface has a non-curved portion 1202. Figure 13 shows a warped model 1300 in which a spherical surface 1350 is used for the warping.

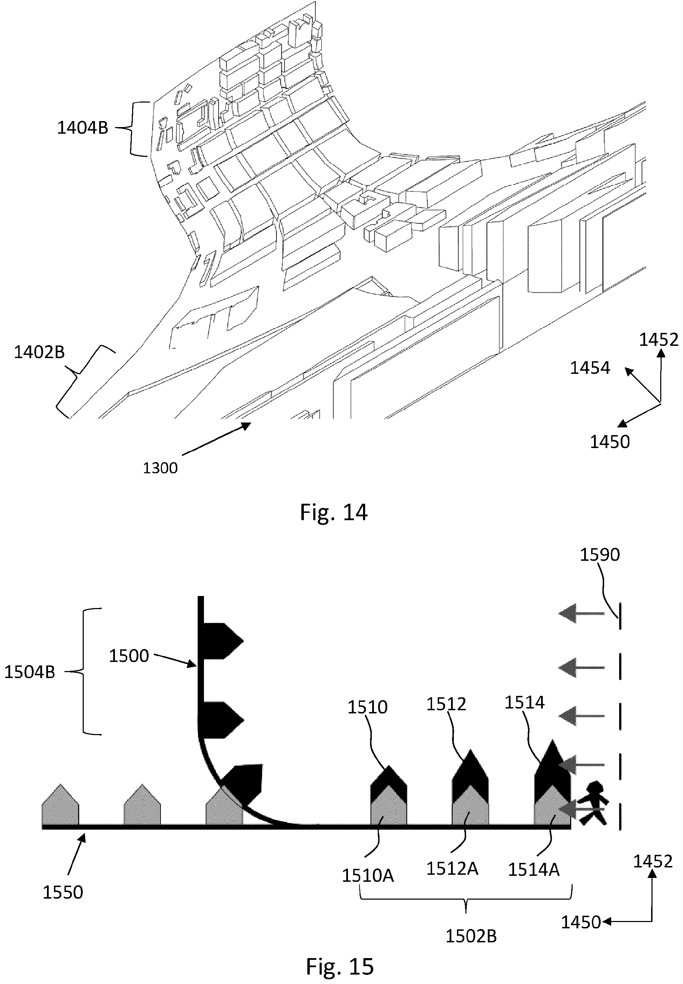

In some examples, the virtual camera is a perspective camera and the first image 300 is a perspective projection. In some examples, the virtual camera is an orthographic camera. Figure 14 shows a further example of a warped model 1400 that has been warped using an approach in accordance with the present disclosu0re. In this example, the model has been warped with an approach that presumes that the image captured at step 608 of the method is captured with an orthographic camera. The warping is such that perspective distortion is simulated in the first portion of the image that is captured despite the use of an orthographic camera to capture the image.

The model 1400 comprise a first portion 1402B and a second portion 1404B. The warping is different between the second portion 1404B the first portion 1402B. In the first portion 1402B, the warping is more complex. As well as bending, the warping of the first portion 1402B comprises a stretch along a first axis (represented by 1450) and a stretch along a second axis (represented by 1452). The first and second axes 1450, 1452 are orthogonal to one another. The first axis 1450 may be described as a horizontal axis. The second axis 1452 may be described as a vertical axis. The amount of stretching in the first and second axis varies with difference along a third axis (represented by 1454) which is orthogonal to both first and second axes 1450, 1452. Specifically, the amount of stretching decreases along the third axis approaching the second portion 1404B of the modelIn this example, the warping of the second portion 1404B is such that the second portion 1404B itself is non-curved (i.e. is flat). This may help ensure that an orthographic view is achieved in the second portion of the first image.

Figure 15 is a schematic side view of a warped model 1500 which has been warped in the same ways as the warped model 1400 of Figure 14. Figure 15 shows the warped model 1500 superimposed on the original un-warped model 1550 (i.e. the un-warped model 1550 corresponds to the model data received at step 604 of the method and the warped model 1500 corresponds to the model data after warping at 606 of the method). Again, the warped model 1500 of Figure 15 comprises a first portion 1502B and a second portion 1504B. The first and second portions of the warped models 1400, 1500 have been warped similarly. For example, Figure 15 shows how a second portion 1504B of the model has been warped similarly to previously described examples with a bending action. However, the warping of the first portion 1502B is more complex and includes stretching as well as bending. This stretching can be seen by looking at the building of the model.

The un-warped model 1550 comprises a plurality of buildings, including a first building 1510A, a second building 1512A and a third building 1514A. Corresponding buildings exist in the warped model 1500, including a first warped building 1510B, a second warped building 1512B and a third warped building 1514B. The first, second and third warped buildings 1510B, 1512B, and 1514B all exist in the first portion 1502B of the warped model 1500. Therefore, each of the warped buildings 1510B, 1512B, and 1514B is stretched. The stretching is in both height and width. However, because Figure 15 is a side view, only the stretching in height is apparent. The amount of stretching is greater closer to a viewer 1560. Thus, the third warped building 1514B has been stretched in height (and width) relative to the third building 1514A to a greater extent than the second warped building 1512B relative to the second building 1512A. In turn, the second warped building 1512B has been stretched in height (and width) relative to the second building 1512A to a greater extent than the first warped building 1510B relative to the first building 1510A.

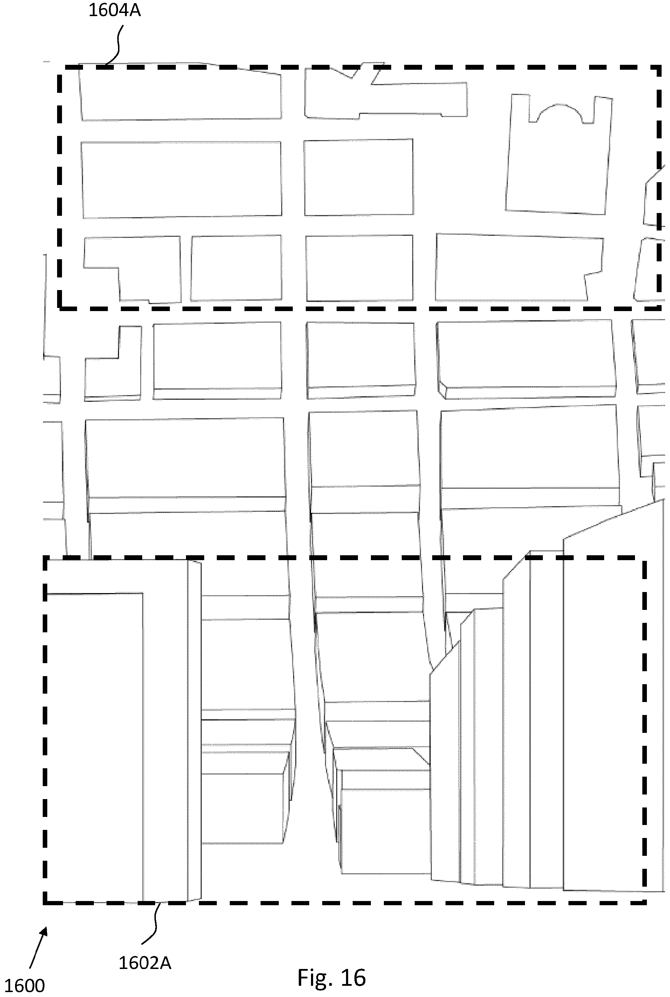

Figure 15 also represents an orthographic camera 1590 which is a virtual camera used at step 608 of the method to capture a first image. The first image 1600 captured by camera 1590 is shown in Figure 16. As in previous examples, the first image 1600 comprise a first portion 1602A and a second portion 1602A.

In this example, the first portion 1602A shows a simulated perspective view of the first portion 1402B of the warped model 1400 of Figure 14. This is achieved by the distortions (e.g. stretching) in the warped model 1400, even though the camera is an orthographic camera 1590. It should be appreciated that the first portion 1602A of the first image 1600 appears different to the perspective view of the model shown in Figure 14. This is because of the use of the orthographic camera 1590. The distortions / warping present in the model of Figure 14 simulate a perspective view in first portion 1602A of the first image 1600, despite (and because) the first image 1600 is an orthographic projection. In some examples, the stretching (which achieves the perspective view) can be uniform along one or more of the axes, or vary along one or more or axes. Uneven stretching can further mimic a perspective view so that for example the vertical (and horizontal) lines in 1602a are converging and not parallel.

The second portion 1604A shows an orthogonal top view of the second portion 1404B of the warped model 1400.

List of reference numerals:
100, 500, 820, 830 - model of region
101 - first location
102 - warped model of region
150 - curved surface
160 - deviation between curved surface and warped model of region
170 - viewing direction
300 - (first) image being a visualisation of a portion of the warped model
302 - first portion of image 300
302B - portion of model shown in first portion of image 300
304 - second portion of image 300
304B - portion of model shown in second portion of image 300
305 - Direction arrow
306 - Waypoint / Third party location marker
602 - obtaining and / or receiving first position information of a user at first location
604 - receiving model data of a model of a region comprising the first location
606 - processing the model data such that a portion of the model is warped based on a virtual curved surface
608 - capture a first image as a visualisation of the warped model from a viewing position at the first location
610 - output image data of the first image
500 - un-warped model
502 - warped model
510 - first location
520 - first building
530 - second building
600 - field of view of user at first location
700 - (first) image of model data comprising secondary, navigation, data
702 - first portion of image 700
704 - second portion of image 700
705 - route arrow
706 - way finder
810 - first position
822, 832 - warped model
910 - first location
912 - second location
914 - third location
1000 - image processing system
1001 - processor
1002 - input / output
1003 - memory
1004 - program
1005 - computer-readable storage medium
1100, 1200, 1300 - differently warped models
1202 - non-curved portion
1350 - spherical curved surface
1400 - warped model
1402B - first portion of warped model 1400
1404B - second portion of warped model 1400
1450 - first axis
1452 - second axis
1454 - third axis
1500 - warped model
1502B - first portion of warped model 1500
1504B - second portion of warped model 1500
1510A - a first building in un-warped model 1550
1512A - a second building in un-warped model 1550
1514A - a third building in un-warped model 1550
1510B - a first building in warped model 1500
1512B - a second building in warped model 1500
1514B - a third building in warped model 1500
1550 - un-warped model
1590 - orthographic camera
1600 - first image of warped model 1400
1602A - first portion of first image 1600
1604A - second portion of first image 1600

## Claims

1. An image processing system (1000) for outputting an image of a warped model of a region, the system comprising a processing unit arranged to:
receive first position information associated with a first location (510);
process model data of a model (100, 500) of a region comprising the first location (510), the processing comprising warping at least a portion of the model (100, 500) based on a curved surface (150); and
output image data of a first image (300) of at least a portion of the warped model (102), the first image (300) being from a viewing position comprising the first location (510);
wherein the curved surface (150, 550) is arranged such that the first image comprises:
a first portion (302) comprising a substantially perspective view of part of the warped model; and
a second portion (304) comprising an aerial view of part of the warped model.

2. The image processing system of claim 1, wherein the image processing system is arranged to determine a radius of curvature of the curved surface (150, 550, 850) based on a received first control signal; and / or wherein the image processing system is arranged to determine an angular range of at least one of the first image (300) and the curved surface (150, 550) based on a received second control signal.

3. The image processing system of any one of the preceding claims, wherein the radius of curvature of the curved surface is 50 metres or more.

4. The image processing system of any one of the preceding claims, wherein the processing unit is arranged such that the image data of the first image (1600) is captured by a virtual orthographic camera (1590) such that the second portion (1604A) of the first image (1600) comprises an orthographic top view of part of the warped model.

5. The image processing system of claim 4, wherein the processing unit being arranged to warp the model data comprises distorting a first part of the model such that the first portion (1602A) of first image (1600) comprises a simulated perspective view of the first part of the model when captured by the orthographic camera.

6. The image processing system of any one of the preceding claims, wherein the model (100, 500) is a model of a portion of a city or geographical region.

7. The image processing system of any one of the preceding claims, wherein the model data comprises data from at least one of photogrammetry, LiDAR scans, or Geographic Information System (GiS) data.

8. The image processing system of any one of the preceding claims, wherein the image processing system (1000) is arranged to receive second position information associated with a second location (912), and output a second image of at least a portion of a warped model, the second image being from a viewing position at the second location (912).

9. The image processing system of claim 8, wherein the image processing system is arranged to process model data of a second model of a region comprising the second location (912), the processing comprising warping at least a portion of a second model based on a curved surface.

10. The image processing system of claim 8 or 9, wherein the image processing system is arranged to repeatedly receive position information associated with an nth location, and to output image data of an nth image of at least a portion of a warped model for each received location.

11. A navigation system comprising the image processing system of any one of the preceding claims and a display arranged to receive and display image data output by the processing unit of the image processing system.

12. A computer-implemented method of imaging processing for outputting an image of a warped model of a region, the method comprising, at a processing unit:
receiving first position information associated with a first location (510);
processing model data of a model (100, 500) of a region comprising the first location (510) to warp at least a portion of the model (100, 500), the warping being based on a curved surface (150, 550); and
outputting image data of a first image (300) of at least a portion of the warped model (102), the first image (300) being from a viewing position comprising the first location (510);
wherein the first image comprises:
a first portion (302) comprising a substantially perspective view of part of the warped model; and
a second portion (304) comprising an aerial view of part of the warped model.

13. A data processing system comprising a processor adapted to perform the steps of the method of claim 12.

14. A computer program product comprising instructions which, when the program is executed by a computer, cause the computer to carry out the steps of the method of claim 12.

15. A computer-readable storage medium comprising instructions which, when executed by a computer, cause the computer to carry out the steps of the method of claim 12.
